# EUROPEAN PATENT SPECIFICATION

(11) **EP 3 982 183 B1**
(45) Date of publication and mention of the grant of the patent: **05.11.2025**
(21) Application number: 21197477.9
(22) Date of filing: 17.09.2021
(51) Int. Cl.: G02B 7/182, G02B 27/01

(54) **APPARATUS COMPRISING A MIRROR ROTATABLY MOUNTED TO A HOUSING**
VORRICHTUNG MIT EINEM DREHBAR AN EINEM GEHÄUSE BEFESTIGTEN SPIEGEL
APPAREIL COMPRENANT UN MIROIR MONTÉ ROTATIF SUR UN BOÎTIER

(30) Priority: 07.10.2020 EP 20465567; 08.10.2020 DE 102020212736
(43) Date of publication of application: 13.04.2022
(73) Proprietor: Continental Automotive Technologies GmbH, 30175 Hannover (DE)
(72) Inventor: Miclea, Andreea, 60488 Frankfurt am Main (DE)
(74) Representative: Aumovio Corporation

(56) References cited:
- JP-A- 2017 207 543
- JP-A- 2018 192 962
- JP-A- 2019 066 527

## Description

The present invention is related to an apparatus for generating a virtual image. The invention is further related to a vehicle comprising such an apparatus.

As an example of an apparatus for generating a virtual image, a head-up display, also referred to as a HUD, is known as a tool for displaying information in the field of vision of a driver. The driver can therefore maintain his viewing direction. While such systems, due to their complexity and costs, were originally mainly used in the aviation sector, they are now also being used in large scale in the automotive sector.

From the state-of-the-art such apparatus for generating a virtual image are known. Usually they comprise a housing and mirror. The mirror is mounted inside the housing such that an image received by the mirror is reflected to create the virtual image. To support mounting of the mirror inside the housing, usually a mirror support is used to which the mirror is mounted. For example, a separate mirror is fixed, e.g., glued, on a designated plane on the mirror support. Another example known from the art is to evaporate a reflecting coating onto the designated plane of the mirror support.

It is further known from the state-of-the-art that the mirror is mounted inside the housing such that a rotation of the mirror about an axis of rotation is allowed inside the housing. Exemplary reasons to allow a rotation of the mirror about an axis of rotation inside the housing are the possibility of an adaption of the size of the virtual image and or the position of the virtual image, for example such that position and size of the virtual image may be adapted to the driving person individually by the respective person, e.g. a driver, itself.

To support the rotation, it is known from the state-of-the-art that the mirror support comprises a protrusion along the axis of rotation. To mount the mirror rotatable inside the housing, usually the protrusion or at least a part of the protrusion is rotatably adapted inside a bearing that is fixed to the housing. A metal bracket and a rivet may be used to fix the bearing in place inside the housing.

From EP3232250A1 a head-up display is known that comprises a mounting member with a U-shaped recess into which a tubular bearing can be inserted from above. The mounting member can be fixed to a housing of the head-up display using screws. To block a movement of the bearing inside the recess in a direction perpendicular to the axis of rotation, a bearing retainer is used that is fixed to a wall portion inside the recess. A protrusion is rotatably adapted inside the tubular bearing allowing a mirror of the head-up display to rotate around an axis of rotation.

However, the described embodiments of an apparatus for generating a virtual image have the disadvantage that at least one extra component is required to mount the mirror inside the housing and/or to support rotation of the mirror inside the housing. This in turn means that additional components have to be manufactured and the mirror has to be connected to these components in an assembly process before it can be mounted in the housing. This is not only associated with higher costs but also with a higher time expenditure during the assembly process.

From JP 2017 207543 A an apparatus for generating a virtual image is known comprising a housing, a mirror and a mirror support, wherein the mirror is mounted to the mirror support and the mirror support supports the mirror for being mountable inside the housing such that an image received by the mirror is reflected to create the virtual image. The mirror support is configured to support rotation of the mirror inside the housing in a mounted condition of the mirror about an axis of rotation. The mirror support comprises lateral edges, each of the lateral edges comprises a point at which the axis of rotation breaks through the surface of the mirror support. The mirror support comprises at least at one of its lateral edges a protrusion which, in a mounted condition of the mirror, protrudes in direction of the axis of rotation from the at least one of the lateral edges. The housing comprises a recess with an opening. The recess is configured to receive at least a part of the protrusion. The apparatus comprises a holder. The holder is fixable to the housing, the holder is configured to lock the opening, and the holder is configured to restrict a movement of the part in a direction perpendicular to the axis of rotation. The part of the protrusion is in direct contact to one or more surfaces of the recess and/or the holder. The mirror comprises two protrusions, a first protrusion at a first lateral edge and a second protrusion at a second lateral edge. The housing comprises two recesses, a first recess to receive the part of the first protrusion and a second recess to receive the part of the second protrusion. The first recess, in a mounted condition of the mirror, is implicitly configured to exclusively allow for a rotation about an axis of rotation of the part inside the first recess and the second recess, in a mounted condition of the mirror, is implicitly configured to allow for a rotation about an axis of rotation of the part inside the second recess and for a movement of the part in the second recess in a direction along the axis of rotation.

It is an object of the present invention to provide an improved setup for an apparatus for generating a virtual image.

This object is achieved by an apparatus according to claim 1 and by a vehicle comprising such apparatus according to claim 11. The dependent claims include advantageous further developments and improvements of the present principles as described below.

According to an aspect of the invention, an apparatus for generating a virtual image, comprises a housing, a mirror and a mirror support. The housing may for example be made from metal or plastic. The mirror is mounted to the mirror support via which the mirror is mountable inside the housing, such that an image received by the mirror is reflected to create the virtual image. The mirror support is configured in such a way that in a mounted condition of the mirror inside the housing, the mirror support supports a rotation of the mirror inside the housing about an axis of rotation. To support the rotation of the mirror, the mirror support comprises at least at one of its lateral edges a protrusion. Each lateral edge comprises a point at which the axis of rotation breaks through the surface of the mirror support. The mirror support thus comprises two lateral edges, one on a right side and one on a left side in a mounted condition of the mirror inside the housing. The protrusion is configured such that in a mounted condition of the mirror inside the housing, it protrudes in direction of the axis of rotation from the at least one of the two lateral edges. To mount the mirror via the mirror support to the housing, the housing comprises a recess with an opening via which at least a part of the protrusion may be inserted into the recess. The recess is configured in such a way that it receives at least a part of the protrusion. To lock the opening and to restrict a movement of the part in a direction perpendicular to the axis of rotation the apparatus comprises a holder that is fixable to the housing. In a mounted condition of the mirror inside the housing, the part of the protrusion is in direct contact to one or more surfaces of the recess and/or the holder. Non-existing surfaces form the opening through which the part of the protrusion can be inserted into the recess. In the sense of the present disclosure, at least one non-existent surface which forms a part or an area of the opening is locked by the holder, whereby locked in the sense of the present disclosure means that at least a part or an area of the opening is locked such that a movement of the part of the protrusion in a direction perpendicular to the axis of rotation is restricted. In the sense of the present disclosure in direct contact means that the part of the protrusion directly abuts on one or more surfaces of the recess and/or the holder.

The mirror via the mirror support is assembled directly inside the housing, i.e. via the part of the protrusion inside the recess in the housing, without the necessity to assemble it first to at least one further separate component, e.g. to a separate bearing. Thus, the number of steps in an assembling process is reduced and hence the time to assemble the mirror inside the housing is reduced. Additionally, the manufacturing costs are reduced as well as for example transportation costs due to a shipment from different suppliers. Moreover, because the part of the protrusion is directly received in the recess without the necessity of an additional component to support rotation, the tolerances are reduced that are normally needed to be able to mount the mirror via the mirror supply inside the housing.

In an embodiment of the present disclosure, the part is received in the recess in a form-fitting manner in a mounted condition of the mirror. In the sense of the present disclosure in an embodiment in which the part is received in the recess in a form-fitting manner in a mounted condition of the mirror, a movement of the part in the recess is restricted at least into two directions, e.g. in a direction perpendicular of the axis z of rotation and/or in a direction along the axis z of rotation. For example, the movement may be restricted because the part, when received in the recess, is in direct contact to a surface of the recess and to a surface of the holder. It is clear that a rotational movement around the axis z of rotation is not restricted. An advantage of this embodiment is that the form-fit in a simple way supports rotational movements of the part within the recess about an axis z of rotation, while other movements, i.e. at least a movement of the part towards a surface of the recess and/or towards the holder, are restricted.

In an embodiment of the present disclosure, at least two of the part, the locking element and the recess are configured such that in a mounted condition of the mirror, the part is received in the recess in a form-fitting manner. This embodiment further limits additional movements of the part inside the recess other than a rotation of the part around the axis of rotation, which further stabilizes the part within the recess.

In an embodiment of the present disclosure, at least one of the part, the holder and a surface of the recess comprise a lubricant. The lubricant supports the rotation of the part inside the recess and in addition may support operating life of the housing. In an embodiment, the part, the holder and/or the surface of the recess comprise or consist of a material that comprises a lubricant or which material itself forms the lubricant. In another embodiment, the part, the holder and/or the surface of the recess comprise a coating made from a material that supports a lubrication. For example, the coating may consist of PTFE (PTFE: Polytetrafluorethylen).

In an embodiment of the present disclosure, the apparatus comprises an elastically deformable element, which in a mounted condition of the mirror is elastically prestressed and which exerts an elastic force on the part. The elastically deformable element is used to additionally suppress a movement other than a rotation and in addition absorb forces that are exerted on the part from the surfaces of the recess and/or the holder and vice versa, for example due to shocks and/or impacts inside the housing.

In a preferred embodiment of the present disclosure, the holder is configured as the elastically deformable element. Thus, no additional elastically deformable element is needed to exert an elastic force on the part in a mounted condition of the mirror. The holder in this embodiment is configured to support rotation of the part in the recess around the axis of rotation and to support a safe storage of the part inside the recess, e.g. against impacts and/or shocks and thus prevents possible damages which could occur e.g. by impacts and/or shocks inside the housing.

In an embodiment of the present disclosure, the holder is made of flat metal. The manufacturing of the holder using flat metal is particularly simple and therefore particularly cost-effective.

In an embodiment of the present disclosure, the holder is curved. The curved shape makes it easy to ensure that the holder may be used for locking the opening, restricts a movement of the part of the protrusion perpendicular to the axis of rotation and to fix the holder to the housing. In addition, such a shape may also support possible elastically properties of the holder.

In an embodiment of the present disclosure, the holder is fixable to the housing by a rivet and/or by screw connection. Such fasteners make installation of the holder particularly simple and cost-effective. In yet another embodiment, two rivets or two screws being used to fix the holder to the housing. The use of two rivets or two screws is especially advantageous if the holder is configured as the elastically deformable element.

In an embodiment of the present disclosure, the recess is integrally formed inside the housing. Such an embodiment eliminates additional steps that would be necessary, for example, to provide an extra part that has such a recess and has to be attached to the housing. This also saves costs, for example in the manufacturing process. It is particularly advantageous if the housing is made of plastic in an injection molding process. For this reason, in an embodiment of the present disclosure the housing is made of plastic in an injection molding process, whereby the recess is integrally formed to the housing.

The mirror comprises two protrusions, a first protrusion at a first lateral edge and a second protrusion at a second lateral edge. Such an embodiment ensures a better alignment and a better fixation of the mirror inside the housing.

The housing comprises two recesses, a first recess to receive the part of the first protrusion and a second recess to receive the part of the second protrusion, the first recess differs from the second recess in that in a mounted condition of the mirror, the first recess is configured to exclusively allow for a rotation about an axis z of rotation of the part inside the first recess in a mounted condition of the mirror and the second recess is configured to allow for a rotation about an axis z of rotation of the part inside the second recess and for a movement of the part in the second recess in a direction along the axis z of rotation.

An advantage of configuring the first recess in such a way that it only allows a rotation of the part within the first recess, and restricting other movements, e.g. movements in the direction of the axis z of rotation and movements perpendicular to the direction of the axis z of rotation, is that such a configuration allows a precise positioning of the mirror within the housing. An advantage of configuring the second recess in such a way that it in addition to supporting rotation of the part in the second recess about the axis z of rotation also supporting a movement of the part in the second recess along the axis z of rotation is that tolerances can be compensated, which can occur e.g. due to an expansion of the mirror due to increased temperatures. In addition, the possibility of a movement of the part inside the second recess allows for an easier adapting during an assembling process.

According to another aspect of the invention, a vehicle comprises an apparatus for generating a virtual image as described above.

Further features of the present invention will become apparent from the following description and the appended claims in conjunction with the figures.

### Figures

- Fig. 1: shows a sketch of a state-of-the-art head-up display for a motor vehicle;
- Fig. 2: shows a perspective view of a housing of an apparatus according to the invention in a mounted condition of a mirror inside the housing;
- Fig. 3: shows the protrusion, the recess and the holder of Fig. 2 in greater detail;
- Fig. 4: shows Figure 3 in an unmounted condition of the mirror in the housing;
- Fig. 5a: shows a perspective view of an alternative embodiment of a recess according to the invention;
- Fig. 5b: shows Figure 5a in a mounted condition of the mirror inside the housing;
- Fig. 6a: shows a perspective view of another alternative embodiment of a recess according to the invention;
- Fig. 6b: shows Figure 6a in a mounted condition of the mirror inside the housing; and
- Fig. 7: shows an alternative embodiment of how the holder is fixed to the housing,
- Fig. 8: shows a detailed view of an aspect of the invention.

### Detailed description

For a better understanding of the principles of the present invention, embodiments of the invention will be explained in more detail below with reference to the figures. Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

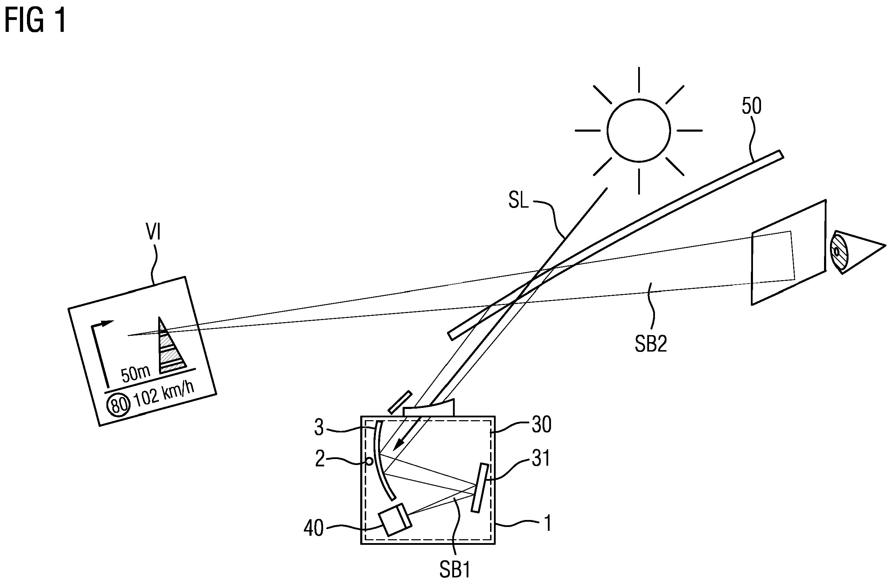

Fig. 1 shows a sketch of a state-of-the-art head-up display for a motor vehicle. The head-up display has an image generator 40, an optical unit 30 and a partially reflecting, translucent pane 50. A beam SB1 emanates from a display element of the image generator 40 and is reflected by a smaller mirror 31, here a folding mirror onto a bigger mirror 3, here an aspherical mirror, which reflects it in the direction of the pane 50, which here is a windshield of the motor vehicle. From there, the SB2 beam is directed towards the eye of an observer, e.g. a driver of the motor vehicle.

The observer sees a virtual image VI, which is located outside the vehicle above the bonnet or even in front of the vehicle. Due to the interaction of the optical unit 30 and the pane 50, the virtual image VI is an enlarged representation of the image displayed by the display element. Here a symbolic speed limit, the current vehicle speed and navigation instructions are displayed. As long as the eye is inside an eyebox indicated by a rectangle in the sketch, all elements of the virtual image are visible to the eye. If the eye is located outside the eyebox, the virtual image VI is only partially or not at all visible to the viewer. The larger the eyebox is, the less restricted the viewer is in his choice of the seating position.

The curvature of the aspherical mirror 3 is adapted to the curvature of the windshield and ensures that the image distortion is stable over the entire eyebox. The aspherical mirror 3 is rotatably supported by a bearing 2 which is fixed to a housing 1 of the head-up display using a metal bracket (not shown). By rotating the aspherical mirror 3, it is possible to shift the eyebox and thus to adjust the position of the eyebox to the position of the eye. The folding mirror 31 ensures that the distance travelled by the beam SB1 between the display element of the image generator and the aspherical mirror 3 is long, while at the same time the optical unit 30 remains compact. The optical unit 30 and the image generator 40 are accommodated in a housing 1 and separated from the environment by a transparent cover. The optical elements of the optical unit 30 are thus protected, for example, against dust inside the vehicle. An optical foil or polarizer is located on the cover. The display element is typically polarized and the pane 50 acts like an analyzer. The purpose of the polarizer is, therefore, to influence the polarization such as to achieve a uniform visibility of the useful light. An anti-glare shield serves to securely absorb light reflected across the interface of the cover so that no glare is caused to the observer. In addition to sunlight SL, also light from another source of interference might reach the display element of the image generator 40. In combination with a polarization filter, the polarizer can also be used to suppress incident sunlight SL.

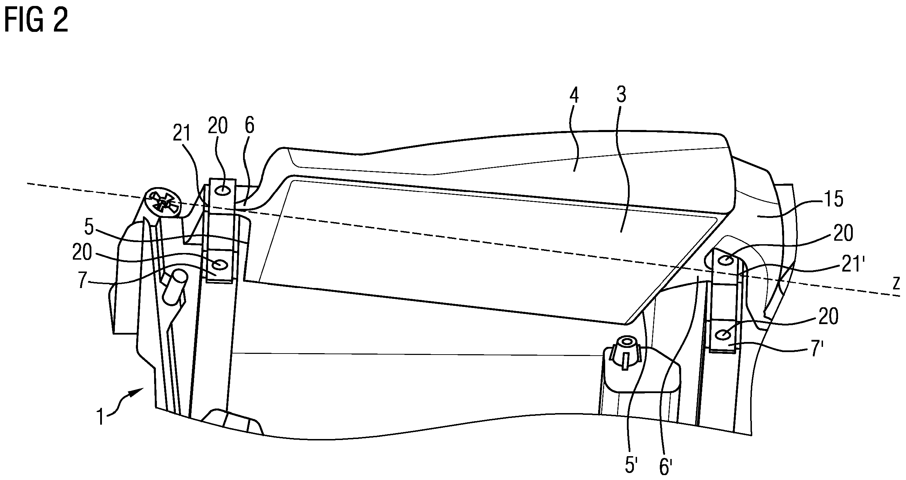

Figure 2 shows a perspective view of a housing 1 of an apparatus according to the invention in a mounted condition of a mirror 3 inside the housing 1. The housing 1 is made from plastic.

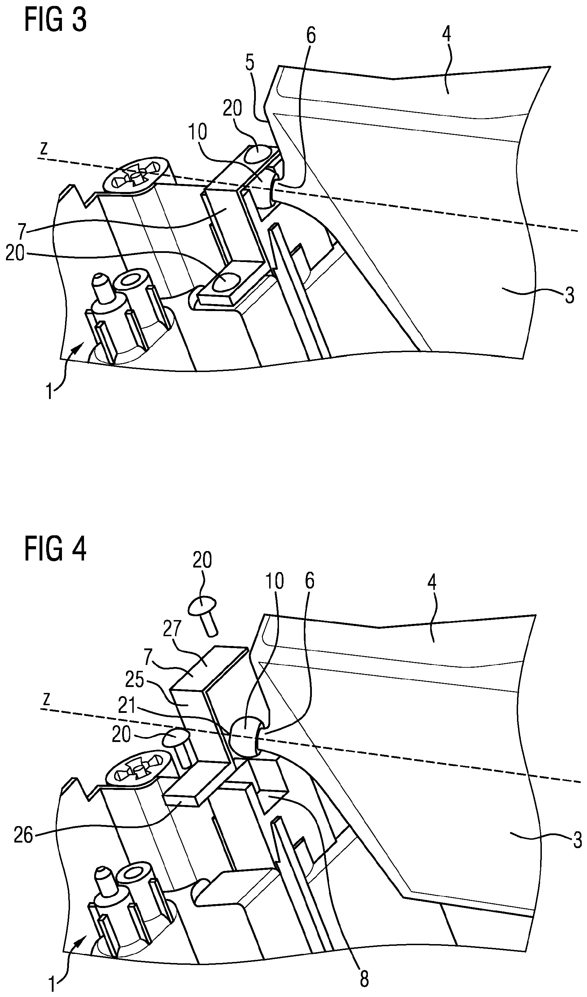

The mirror 3 is mounted inside the housing 1 via a mirror support 4 to which the mirror 3 is attached. The mirror support 4 supports a rotatably mounting of the mirror 3 inside the housing. For that purpose, the mirror support 4 comprises at least one protrusion 6, 6'. As shown in Figure 2, the mirror support 4 comprises two protrusions 6, 6'. A first protrusion 6 on a first lateral edge 5 and a second protrusion 6' on a second lateral edge 5' of the mirror support 4. The first and second lateral edge 5, 5' each comprises a point 21, 21' at which the axis z of rotation breaks through the surface of the mirror support 4. The point 21 at which the axis z of rotation breaks through the surface of the mirror support 4 can be better seen in Figure 4.

In the mounted condition of the mirror 3 inside the housing 1, as shown in Figure 2, the first lateral edge 5 is located at the left side of the mirror support 4 and the second lateral edge 5' is located on the right side of the mirror support 4. The first and second protrusion 6, 6' each protrude from a respective lateral edge 5, 5' in direction of the axis z of rotation.

In the mounted condition of the mirror 3 inside the housing 1, a part 10 of the first protrusion 6 engages the housing 1 in a first recess 8 located at a left, rear side of the housing 1 and a part 10 of the second protrusion 6' engages the housing in a second recess 8', located at a right rear side of the housing 1.

In an assembling process of the mirror 3 inside the housing 1, that can be seen in Figures 3 and 4, where Figure 3 shows the first protrusion 6, the part 10 of the first protrusion 6, the first recess 8 and a holder 7 of Figure 2 in greater detail and where Figure 4 shows Figure 3 in an unmounted condition of the mirror 3 in the housing 1, the first protrusion 6 is inserted in the housing 1 through an opening of the first recess 8 in such a way that a part 10 of the first protrusion 6 is received inside the first recess 8.

As can be seen best in Figure 4, the recess 8, 8' comprises surfaces, four in total, inside the housing 1 with a square shape. Three of the surfaces are located in a direction perpendicular to the axis z of rotation and one surface is located in the direction of the axis z of rotation. Two non-existing surfaces form the opening of the recess 8. A first of the two non-existing surfaces is located essentially in direction of the axis z of rotation at an area where in a mounted condition of the mirror 3, the protrusion 6 connects the part 10 and the mirror support 4. The second of the two non-existing surfaces is located perpendicular to the axis z of rotation such that the protrusion 6 and thus the mirror 3 may be inserted in the recess 8 from above. Moreover, the opening is formed by a segment with an opening angle of 45 degrees in a plane perpendicular to the axis z of rotation.

Via a holder 7, 7', which is fixed to the housing 1 by means of screws 20, an area of the opening of the respective recess 8, 8' is locked, so that the part 10 can still be rotated around the axis z of rotation within the recess 8, 8', but a movement of the part 10 in a direction perpendicular to the axis z of rotation is restricted. The rotation can be done e.g. using a step motor (step motor not shown) which is connected to an arm 15 of the mirror support 4, as shown in Figure 1.

In the mounted condition as shown in Figures 2 and 3, the respective part 10 is received in the respective recess 8, 8' in a form-fitting manner and the respective part 10 of the respective protrusion 6, 6' is in direct contact to a surface of the holder 7, 7' and to the four surfaces of the respective recess 8, 8'.

To support rotation of the part 10 inside the respective recess 8, 8', the part 10, the respective holder 7, 7' and/or at least one four surfaces of the respective recess 8, 8' may comprise a lubricant. It is, however, likewise possible or additionally possible to use an elastically deformable element that in the mounted condition of the mirror 3 is elastically prestressed and exerts an elastic force on the part 10 in the recess.

In Figures 2 to 4, the respective holder 7, 7' is configured as the elastically deformable element that in a mounted condition of the mirror 3 is elastically prestressed and exerts an elastic force on the part 10. As can be seen best in Figures 3 and 4, the respective holder 7, 7' is a curved flat metal sheet that comprises a middle part 25 and two end parts 26, 27, a first end part 26 and a second end part 27. The end parts 26, 27 extending in opposite directions from opposite ends of the middle part 25. Each respective holder 7, 7' is fixed to the housing 1 by two screws 20. One screw 20 goes through the first end part 26 and the other screw 20 goes through the second end part 27. The screw 20 which goes through the first end part 26 is completely screwed into the housing 1, so that the first end part 26 fits tight on the housing 1. The screw 20 which goes through the second end part 27 is not completely screwed into the housing 1. This ensures that the elastically deformable element, which here corresponds to the holder 7, 7', may on the one hand support rotation of the part 10 inside the recess 8, 8' and on the other hand may for example, in case the housing 1 underlies impacts and/or shocks, support a safe storage of the part 10 inside the recess 8, 8' and prevent possible damages in the housing 1.

Depending on how deep the screw 20 which goes through the second end part 27 is screwed into the housing 1, the maximum deflection of the second end part 27 of the holder 7, 7' and thus the elastic element can be adjusted.

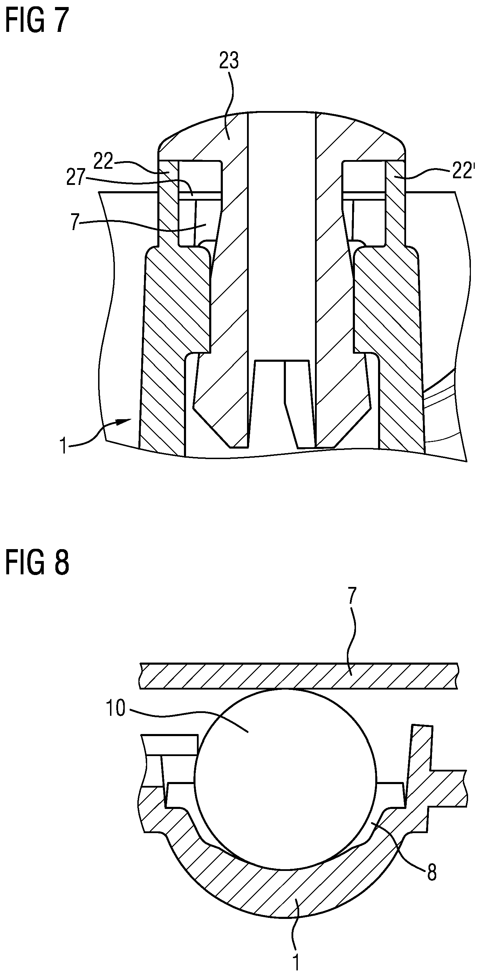

An alternative embodiment of how the holder 7, 7' is fixed to the housing 1 is shown in Figure 7. The holder 7, 7' is configured as the elastically deformable element that in a mounted condition of the mirror 3 being elastically prestressed and exerting an elastic force on the part 10 (not shown). Two rivets 23 are used to fix the holder 7, 7' to the housing 1, whereby only one rivet 23 which goes through the second end part 27 of the holder 7, 7' can be seen in Figure 7. The housing 1 comprises wall portions 22, 22' at the area where the shown rivet 23 goes through the second end part 27. Each respective wall portion 22, 22' comprises a contact surface for the head of the shown rivet 23. The wall portions 22, 22' are configured as spacers for the shown rivet 23, so that a space is created between the housing 1 and the rivet 23. The shown rivet 23 goes through the second end part 27 of the holder 7, 7' such that the second end part 27 of the holder 7, 7' is allowed to move in a direction along the elongation of the shown rivet 23 but cannot move in a direction perpendicular to the elongation of the shown rivet 23. The possibility to move in a direction along the elongation of the shown rivet 23 ensures that the elastically deformable element, which here corresponds to the holder 7, 7', may on the one hand support rotation of the part 10 inside the recess 8, 8' (not shown) and on the other hand may for example, in case the housing 1 underlies impacts and/or shocks, support a safe storage of the part 10 inside the recess 8, 8' and prevent possible damages in the housing 1. At the area of the not shown rivet, the housing comprises no wall portions and no space between the housing and the not shown rivet. The rivet that is not shown in Figure 7 thus fixes the first end part 26 (not shown) of the holder 7, 7' without any space between the housing 1 and the not shown rivet so that the first end part 26 fits tight on the housing 1 thus supporting a fixation of the first end part 26 of the holder 7, 7' in all directions of the rivet.

Depending on the space between the shown rivet 23 and the housing 1, the maximum deflection of the second end part 27 of the holder 7, 7' and thus the elastic element can be adjusted.

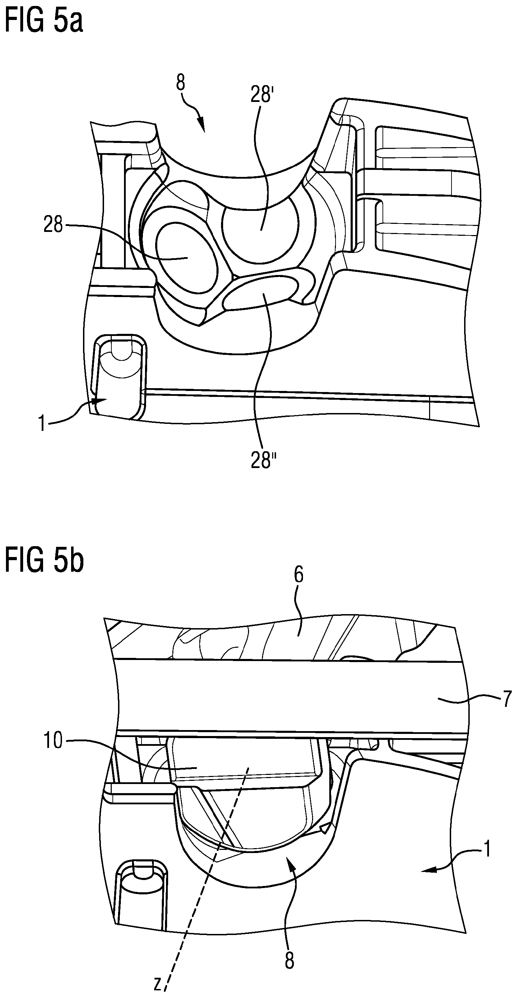

Figure 5a shows a perspective view of an alternative embodiment of a first recess 8 according to the invention and Figure 5b shows the first recess 8 of Figure 5a in a mounted condition of the mirror 3 inside the housing 1. The first recess 8 in Figures 5a and 5b comprises a surface that essentially has a spherical shape. The surface of the first recess 8 in Figures 5a and 5b further comprises three engagement points 28, 28', 28" that are in direct contact with the part 10 in a mounted condition of the mirror 3 inside the housing 1. The first recess 8, via the three engagement points 28, 28', 28", is configured to exclusively allow for a rotation about an axis z of rotation of the part 10 inside the first recess 8 in the mounted condition of the mirror 3 inside the housing 1.

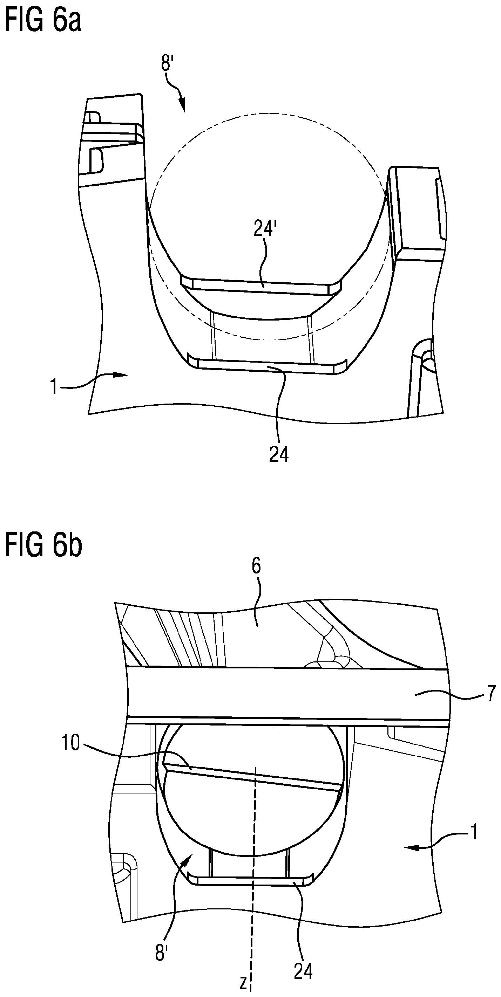

Figure 6a shows a perspective view of an alternative embodiment of a second recess 8' according to the invention and Figure 6b shows the second recess of Figure 6a in a mounted condition of the mirror 3 inside the housing 1. The second recess 8' in Figures 5a and 5b comprises a surface such that the recess comprises a U-formed shape. The second recess 8' further comprises wall portions 24, 24'. In a direction along the axis z of rotation, between the wall portions 24, 24'

The wall portions 24, 24' delimiting the second recess in both directions along the z axis. Between the wall portions 24, 24' the bottom of the U-formed shape serves as one contact surface for the part 10 in the second recess 8'. The extent of this contact surface in the direction of the z axis is chosen to be larger than the extent of the part 10 in the direction of the z axis. The second recess 8' thus is configured in such a way that in a mounted condition of the mirror 3 inside the housing 1, the second recess 8' allows for a rotation about an axis z of rotation of the part 10 inside the second recess 8' and for a movement of the part 10 in the second recess 8' in a direction along the axis z of rotation.

Fig. 8 shows a detailed view of an aspect of the invention. In a recess 8 of the housing 1 the spherical part 10 of the mirror holder is located and affixed in the recess by a holder 7. An important aspect of the invention is the direct contact between the mirror holder part 10 and the housing 1, especially a housing of a head-up display. According to known solutions, there is always an intermediate component which ensures the rotation of the mirror. Where a direct contact is present in known solutions there is no rotatable mirror.

According to the invention there is direct contact between the mirror holder part 10 and housing 1, without an intermediate part. The movement is permitted by having a very low friction coefficient between the parts which can be ensured by using a lubricant between the two rotatable areas or by having a Teflon coating on the housing surface where is in contact with the mirror holder part 10 which is made out of a plastic with a low friction coefficient. Also the shape of the two components in contact allows the easy movement between them and there is no risk of gripping.

### Reference Numerals

- 1: housing
- 2: bearing
- 3: mirror
- 4: mirror support
- 5, 5': lateral edge
- 6, 6': protrusion
- 7, 7': holder
- 8, 8': recess
- 10: part
- 15: arm
- 20: screw
- 21, 21': point
- 22, 22': wall portion
- 23: rivet
- 24, 24': wall portion
- 25: middle part
- 26: first end part
- 27: second end part
- 28, 28', 28": engagement point
- 30: optical unit
- 31: mirror
- 40: image generator
- 50: pane
- z: axis of rotation

## Claims

1. Apparatus for generating a virtual image, comprising a housing (1), a mirror (3) and a mirror support (4), wherein
- the mirror (3) being mounted to the mirror support (4),
- the mirror support (4) is configured to supporting the mirror (3) for being mountable inside the housing (1), such that an image received by the mirror (3) is reflected to create the virtual image,
- the mirror support (4) being configured to support rotation of the mirror (3) inside the housing (1) in a mounted condition of the mirror (3) about an axis (z) of rotation,
- the mirror support (4) comprising lateral edges (5, 5'), each of the lateral edges (5, 5') comprising a point (21, 21') at which the axis (z) of rotation breaks through the surface of the mirror support (4),
- the mirror support (4) comprises a first and a second protrusion (6, 6'), which in a mounted condition of the mirror (3), each protrude from a respective lateral edge (5,5') in direction of the axis (z) of rotation,
- the apparatus comprising a holder (7, 7'), the holder (7, 7') being fixable to the housing (1) and
- the holder (7, 7') being configured to lock the opening,
- the holder being configured to restrict a movement of the part (10) in a direction perpendicular to the axis (z) of rotation,
- the part (10) of the protrusion (6, 6') being in direct contact to one or more surfaces of the recess (8, 8') and/or the holder (7, 7'),
- the housing (1) comprising two recesses (8, 8'), a first recess (8) with an opening to receive the part (10) of the first protrusion (6) and a second recess (8') to receive the part (10) of the second protrusion (6'),
wherein,
the first recess (8), in a mounted condition of the mirror (3), being configured to exclusively allow for a rotation about an axis (z) of rotation of the part (10) inside the first recess (8) and the second recess (8'), in a mounted condition of the mirror (3), being configured to allow for a rotation about an axis (z) of rotation of the part (10) inside the second recess (8') and for a movement of the part (10) in the second recess (8') in a direction along the axis (z) of rotation,
**characterised in that**
the second recess (8') comprising means (24, 24') for delimiting a movement of the part (10) of the second protrusion (6') in both directions along the axis (z) of rotation when received in the second recess (8'), a surface of the second recess (8') arranged between the delimiting means forming a contact surface for the part (10) of the second protrusion (6') when received in the second recess (8'), the extent of the contact surface along the direction of the axis (z) of rotation being larger than the extent of the part (10) of the second protrusion (8') in the direction of the axis (z) of rotation,
wherein the second recess (8') comprises a surface such that the recess (8') comprises a U-formed shape and the second recess (8') further comprises wall portions (24,24'), the wall portions (24,24') delimiting the second recess (8') in both directions along the axis (z) of rotation, between the wall portions (24,24') the bottom of the U-formed shape serves as one contact for the part (10) in the second recess (8'), the extend of this contact surface in direction of the axis (z) of rotation is chosen to be larger than the extend of the part (10) in the direction of the axis (z) of rotation.

2. Apparatus according to claim 1, the part (10) being received in the recess (8, 8') in a form-fitting manner in a mounted condition of the mirror (3).

3. Apparatus according to one of claims 1 or 2, at least one of the part (10), the holder (7, 7') and a surface of the recess (8, 8') comprising a lubricant.

4. Apparatus according to one of the preceding claims, the apparatus comprising an elastically deformable element, which in a mounted condition of the mirror (3) being elastically prestressed and exerting an elastic force on the part (10).

5. Apparatus according to claim 4, the holder (7, 7') being configured as the elastically deformable element.

6. Apparatus according to one of the preceding claims, the holder (7, 7') being made of flat metal.

7. Apparatus according to one of the preceding claims, the holder (7) being fixable to the housing (1) by a rivet and/or by screw (20) connection.

8. Apparatus according to one of the preceding claims, wherein the part (10) is made of plastic material having a low friction coefficient.

9. Apparatus according to one of the preceding claims, wherein the recess comprises a coating which consists of PTFE (PTFE: Polytetrafluorethylen).

10. Apparatus according to one of the preceding claims, wherein the part (10) has a spherical shape.

11. A vehicle comprising an apparatus for generating a virtual image according to one of the preceding claims.

## Patentansprüche

1. Vorrichtung zum Erzeugen eines virtuellen Bildes, umfassend ein Gehäuse (1), einen Spiegel (3) und eine Spiegelhalterung (4), wobei
- der Spiegel (3) an der Spiegelhalterung (4) montiert ist,
- die Spiegelhalterung (4) konfiguriert ist, um den Spiegel (3) so zu stützen, dass er innerhalb des Gehäuses (1) derart montierbar ist, dass ein von dem Spiegel (3) empfangenes Bild reflektiert wird, um das virtuelle Bild zu erzeugen,
- die Spiegelhalterung (4) konfiguriert ist, um eine Drehung des Spiegels (3) innerhalb des Gehäuses (1) in einem montierten Zustand des Spiegels (3) um eine Drehachse (z) zu stützen,
- die Spiegelhalterung (4) Seitenkanten (5, 5') umfasst, wobei jede der Seitenkanten (5, 5') einen Punkt (21, 21') umfasst, an dem die Drehachse (z) die Oberfläche der Spiegelhalterung (4) durchbricht,
- die Spiegelhalterung (4) einen ersten und einen zweiten Vorsprung (6, 6') umfasst, die in einem montierten Zustand des Spiegels (3) jeweils von einer entsprechenden Seitenkante (5, 5') in Richtung der Drehachse (z) vorstehen,
- die Vorrichtung einen Halter (7, 7') umfasst, wobei der Halter (7, 7') an dem Gehäuse (1) befestigbar ist und
- wobei der Halter (7, 7') konfiguriert ist, um die Öffnung zu verschließen,
- der Halter konfiguriert ist, um eine Bewegung des Teils (10) in einer Richtung senkrecht zu der Drehachse (z) zu beschränken,
- das Teil (10) des Vorsprungs (6, 6') in direktem Kontakt mit einer oder mehreren Oberflächen der Aussparung (8, 8') und/oder des Halters (7, 7') ist,
- das Gehäuse (1) zwei Aussparungen (8, 8') umfasst, eine erste Aussparung (8) mit einer Öffnung, um das Teil (10) des ersten Vorsprungs (6) aufzunehmen und eine zweite Aussparung (8'), um das Teil (10) des zweiten Vorsprungs (6') aufzunehmen,
wobei
die erste Aussparung (8) in einem montierten Zustand des Spiegels (3) konfiguriert ist, um ausschließlich eine Drehung um eine Drehachse (z) des Teils (10) innerhalb der ersten Aussparung (8) zu erlauben, und die zweite Aussparung (8') in einem montierten Zustand des Spiegels (3) konfiguriert ist, um eine Drehung um eine Drehachse (z) des Teils (10) innerhalb der zweiten Aussparung (8') und eine Bewegung des Teils (10) in der zweiten Aussparung (8') in einer Richtung entlang der Drehachse (z) zu erlauben,
**dadurch gekennzeichnet, dass**
die zweite Aussparung (8') Mittel (24, 24') zum Begrenzen einer Bewegung des Teils (10) des zweiten Vorsprungs (6') in beiden Richtungen entlang der Drehachse (z), wenn es in der zweiten Aussparung (8') aufgenommen ist, umfasst, eine Oberfläche der zweiten Aussparung (8'), die zwischen den Begrenzungsmitteln angeordnet ist, eine Kontaktfläche für das Teil (10) des zweiten Vorsprungs (6') bildet, wenn es in der zweiten Aussparung (8') aufgenommen ist, wobei die Ausdehnung der Kontaktfläche entlang der Richtung der Drehachse (z) größer ist als die Ausdehnung des Teils (10) des zweiten Vorsprungs (8') in der Richtung der Drehachse (z),
wobei die zweite Aussparung (8') eine Oberfläche derart umfasst, dass die Aussparung (8') einen u-förmigen Verlauf umfasst und die zweite Aussparung (8') ferner Wandabschnitte (24, 24') umfasst, wobei die Wandabschnitte (24, 24') die zweite Aussparung (8') in beiden Richtungen entlang der Drehachse (z) begrenzen, zwischen den Wandabschnitten (24, 24') die Unterseite des u-förmigen Verlaufs als ein Kontakt für das Teil (10) in der zweiten Aussparung (8') dient, wobei die Ausdehnung der Kontaktfläche in Richtung der Drehachse (z) größer gewählt ist als die Ausdehnung des Teils (10) in Richtung der Drehachse (z).

2. Vorrichtung nach Anspruch 1, wobei das Teil (10) in dem montierten Zustand des Spiegels (3) formschlüssig in der Aussparung (8, 8') aufgenommen ist.

3. Vorrichtung nach einem der Ansprüche 1 oder 2, wobei das Teil (10), der Halter (7, 7') und/oder eine Oberfläche der Aussparung (8, 8') ein Schmiermittel umfasst.

4. Vorrichtung nach einem der vorhergehenden Ansprüche, wobei die Vorrichtung ein elastisch verformbares Element umfasst, das in einem montierten Zustand des Spiegels (3) elastisch vorgespannt ist und eine elastische Kraft auf das Teil (10) ausübt.

5. Vorrichtung nach Anspruch 4, wobei der Halter (7, 7') als das elastisch verformbare Element konfiguriert ist.

6. Vorrichtung nach einem der vorhergehenden Ansprüche, wobei der Halter (7, 7') aus flachem Metall hergestellt ist.

7. Vorrichtung nach einem der vorhergehenden Ansprüche, wobei der Halter (7) durch eine Niet- und/oder Schraubverbindung (20) an dem Gehäuse (1) befestigbar ist.

8. Vorrichtung nach einem der vorhergehenden Ansprüche, wobei das Teil (10) aus Kunststoff mit einem niedrigen Reibungskoeffizienten hergestellt ist.

9. Vorrichtung nach einem der vorhergehenden Ansprüche, wobei die Aussparung eine Beschichtung umfasst, die aus PTFE (PTFE: Polytetrafluorethylen) besteht.

10. Vorrichtung nach einem der vorhergehenden Ansprüche, wobei das Teil (10) eine kugelförmige Form aufweist.

11. Fahrzeug, umfassend eine Vorrichtung zum Erzeugen eines virtuellen Bildes nach einem der vorhergehenden Ansprüche.

## Revendications

1. Appareil de génération d'une image virtuelle, comprenant un boîtier (1), un miroir (3) et un support de miroir (4), dans lequel
- le miroir (3) est monté sur le support de miroir (4),
- le support de miroir (4) est configuré pour supporter le miroir (3) afin qu'il puisse être monté à l'intérieur du boîtier (1), de telle sorte qu'une image reçue par le miroir (3) soit réfléchie pour créer l'image virtuelle,
- le support de miroir (4) est configuré pour supporter la rotation du miroir (3) à l'intérieur du boîtier (1) dans un état monté du miroir (3) autour d'un axe (z) de rotation,
- le support de miroir (4) comprend des bords latéraux (5, 5'), chacun des bords latéraux (5, 5') comprenant un point (21, 21') au niveau duquel l'axe (z) de rotation traverse la surface du support de miroir (4),
- le support de miroir (4) comprend une première et une seconde saillies (6, 6') qui, dans un état monté du miroir (3), font chacune saillie d'un bord latéral (5, 5') respectif dans la direction de l'axe (z) de rotation,
- l'appareil comprend un élément porteur (7, 7'), l'élément porteur (7, 7') pouvant être fixé au boîtier (1) et
- l'élément porteur (7, 7') est configuré pour verrouiller l'ouverture,
- l'élément porteur est configuré pour restreindre un déplacement de la pièce (10) dans une direction perpendiculaire à l'axe (z) de rotation,
- la pièce (10) de la saillie (6, 6') est en contact direct avec une ou plusieurs surfaces de l'évidement (8, 8') et/ou de l'élément porteur (7, 7'),
- le boîtier (1) comprend deux évidements (8, 8'), un premier évidement (8) avec une ouverture pour recevoir la pièce (10) de la première saillie (6) et un second évidement (8') pour recevoir la pièce (10) de la seconde saillie (6'), dans lequel,
le premier évidement (8), dans un état monté du miroir (3), est configuré pour permettre exclusivement une rotation autour d'un axe (z) de rotation de la pièce (10) à l'intérieur du premier évidement (8) et le second évidement (8'), dans un état monté du miroir (3), est configuré pour permettre une rotation autour d'un axe (z) de rotation de la pièce (10) à l'intérieur du second évidement (8') et un déplacement de la pièce (10) dans le second évidement (8') dans une direction le long de l'axe (z) de rotation,
**caractérisé en ce que** le second évidement (8') comprend des moyens (24, 24') pour délimiter un déplacement de la pièce (10) de la seconde saillie (6') dans les deux directions le long de l'axe (z) de rotation lorsqu'elle est reçue dans le second évidement (8'), une surface du second évidement (8') disposée entre les moyens de délimitation formant une surface de contact pour la pièce (10) de la seconde saillie (6') lorsqu'elle est reçue dans le second évidement (8'), l'étendue de la surface de contact le long de la direction de l'axe (z) de rotation étant supérieure à l'étendue de la pièce (10) de la seconde saillie (8') dans la direction de l'axe (z) de rotation,
dans lequel le second évidement (8') comprend une surface telle que l'évidement (8') comprend une forme en U et le second évidement (8') comprend également des parties de paroi (24, 24'), les parties de paroi (24, 24') délimitant le second évidement (8') dans les deux directions le long de l'axe (z) de rotation, entre les parties de paroi (24, 24') le fond de la forme en U sert de contact pour la pièce (10) dans le second évidement (8'), l'étendue de cette surface de contact dans la direction de l'axe (z) de rotation est choisie pour être supérieure à l'étendue de la pièce (10) dans la direction de l'axe (z) de rotation.

2. Appareil selon la revendication 1, la pièce (10) étant reçue dans l'évidement (8, 8') par complémentarité de forme dans un état monté du miroir (3).

3. Appareil selon l'une des revendications 1 ou 2, au moins l'un de la pièce (10), de l'élément porteur (7, 7') et d'une surface de l'évidement (8, 8') comprenant un lubrifiant.

4. Appareil selon l'une des revendications précédentes, l'appareil comprenant un élément élastiquement déformable qui, dans un état monté du miroir (3), est précontraint élastiquement et exerce une force élastique sur la pièce (10).

5. Appareil selon la revendication 4, l'élément porteur (7, 7') étant configuré comme élément élastiquement déformable.

6. Appareil selon l'une des revendications précédentes, l'élément porteur (7, 7') étant réalisé en métal plat.

7. Appareil selon l'une des revendications précédentes, l'élément porteur (7) pouvant être fixé au boîtier (1) par un rivet et/ou par une liaison à vis (20).

8. Appareil selon l'une des revendications précédentes, dans lequel la pièce (10) est réalisée en matière plastique ayant un faible coefficient de frottement.

9. Appareil selon l'une des revendications précédentes, dans lequel l'évidement comprend un revêtement constitué de PTFE (PTFE : Polytétrafluoroéthylène).

10. Appareil selon l'une des revendications précédentes, dans lequel la pièce (10) a une forme sphérique.

11. Véhicule comprenant un appareil de génération d'une image virtuelle selon l'une des revendications précédentes.
